# EUROPEAN PATENT APPLICATION

(11) **EP 4 746 504 A1**
(43) Date of publication of application: **20.05.2026**
(21) Application number: 23944611.5
(22) Date of filing: 10.07.2023
(51) Int. Cl.: H04W 28/06, H04W 4/70, H04W 4/80

(54) **INFORMATION INDICATION METHOD, FIRST DEVICE, SECOND DEVICE, COMMUNICATION SYSTEM, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: Stöckeler, Ferdinand
(86) International application number: PCT/CN2023/106572
(87) International publication number: WO 2025/010588

(57) **Abstract**

Embodiments of the present disclosure provide an information indication method, a first device, a second device, a communication system, and a storage medium. The method is executed by the first device and comprises: sending first information to a second device, wherein the first information is used for instructing the second device to trigger the first device to transmit at least one piece of first data, and the first data is small-packet data. A communication mechanism of the technical solution provided by the embodiments of the present disclosure can adapt to IoT devices supporting ambient power.

## Description

### TECHNICAL FIELD

The present disclosure relates to the field of communication technology, and specifically to a method for indicating information, a first device, a second device, a communication system and a storage medium.

### BACKGROUND

In the field of communication technology, an ambient-Internet of Things (ambient IoT) device is an IoT device powered by energy harvesting, characterized mainly by being battery-free or having a limited energy storage capacity (for example, using capacitors), and powered by harvesting radio waves, light, motion, heat, or any other suitable power supply.

### SUMMARY

After introducing an ambient-Internet of Things (ambient IoT) device, a communication mechanism needs to be adjusted.

Embodiments of the present disclosure provide a method for indicating information, a first device, a second device, a communication device, and a storage medium.

According to a first aspect of the embodiments of the present disclosure, a method for indicating information is provided, including: sending first information to a second device, in which the first information is configured to indicate the second device to trigger the first device to transmit at least one piece of first data, and the first data is small-packet data.

According to a second aspect of the embodiments of the present disclosure, a method for indicating information is provided, including: receiving first information sent by a first device; and triggering, according to the first information, the first device to transmit at least one piece of first data, in which the first data is small-packet data.

According to a third aspect of the embodiments of the present disclosure, a method for indicating information is provided, including: sending, by a first device, first information to a second device, in which the first information is configured to indicate the second device to trigger the first device to transmit at least one piece of first data, and the first data is small-packet data.

According to a fourth aspect of the embodiments of the present disclosure, a first device is provided, including: a transceiver module, configured to send first information to a second device, in which the first information is configured to indicate the second device to trigger the first device to transmit at least one piece of first data, and the first data is small-packet data.

According to a fifth aspect of the embodiments of the present disclosure, a second device is provided, including: a transceiver module, configured to receive first information sent by a first device, in which the first information is configured to indicate the second device to trigger the first device to transmit at least one piece of first data, and the first data is small-packet data.

According to a sixth aspect of the embodiments of the present disclosure, a communication system is provided, including a first device and a second device, in which the first device is configured to implement the method for indicating information provided in the first aspect, the second device is configured to implement the method for indicating information provided in the second aspect.

According to a seventh aspect of the embodiments of the present disclosure, a first device is provided, including: one or more processors, in which the first device is configured to execute the method for indicating information according to the first aspect.

According to an eighth aspect of the embodiments of the present disclosure, a second device is provided, including: one or more processors, in which the second device is configured to execute the method for indicating information according to the second aspect.

According to a ninth aspect of the embodiments of the present disclosure, a storage medium for storing instructions is provided. When the instructions are executed by a communication device, the communication device is caused to implement the method for indicating information provided in the first aspect, the second aspect, or the third aspect.

The communication mechanism of the technical solution provided by the embodiments of the present disclosure may adapt to the ambient IOT device.

It should be understood that an above general description and the following detailed description are exemplary and explanatory only, and do not limit the embodiments of the present disclosure.

### BRIEF DESCRIPTION OF THE DRAWINGS

The accompanying drawings, which are incorporated in and constitute a part of this specification, illustrate embodiments consistent with the present disclosure and, together with the specification , serve to explain the principles of the embodiments of the present disclosure.
FIG. 1a is a schematic diagram of a communication system according to an embodiment.
FIG. 1b is a schematic diagram of backscatter according to an embodiment.
FIG. 1c is a schematic diagram of an architecture according to an embodiment.
FIG. 1d is a schematic diagram of a device according to an embodiment.
FIG. 2a is a flowchart of a method for indicating information according to an embodiment.
FIG. 3a is a flowchart of a method for indicating information according to an embodiment.
FIG. 3b is a flowchart of a method for indicating information according to an embodiment.
FIG. 4a is a flowchart of a method for indicating information according to an embodiment.
FIG. 4b is a flowchart of a method for indicating information according to an embodiment.
FIG. 5a is a flowchart of a method for indicating information according to an embodiment.
FIG. 6a is a block diagram of a first device according to an embodiment.
FIG. 6b is a block diagram of a second device according to an embodiment.
FIG. 7a is a block diagram of a user equipment (UE) according to an embodiment.
FIG. 7b is a block diagram of a communication device according to an embodiment.

### DETAILED DESCRIPTION

The embodiments of the present disclosure provide a method and an apparatus for indicating information, a communication device, a communication system and a storage medium.

According to a first aspect, the embodiments of the present disclosure provide a method for indicating information, performed by a first device, in which the first device is an ambient-Internet of Things (ambient IOT) device. The method includes: sending first information to a second device, in which the first information is configured to indicate the second device to trigger the first device to transmit at least one piece of first data, and the first data is small-packet data.

In the above embodiment, since the first device sends, to the second device, the first information configured to indicate he second device to trigger the first device to transmit the at least one piece of first data. After receiving the first information, the second device may, based on the first information, trigger the first device to send the at least one piece of first data. Thus, first data may be transmitted more timely.

In combination with some embodiments in the first aspect, in some embodiments, the method further includes: receiving a first signal sent by the second device, in which the first signal is sent by the second device according to the first information.

In the above embodiment, after receiving the first information, the second device may send the first signal to the first device according to the first information, and the first device may send the first data by using a reflected signal of the first signal.

In combination with some embodiments in the first aspect, in some embodiments, the method further includes: transmitting the at least one piece of first data using the reflected signal of the first signal.

In the above embodiment, after receiving the first signal, the first device may transmit the at least one piece of first data using the reflected signal of the first signal.

In combination with some embodiments in the first aspect, in some embodiments, the first information includes at least one of: a first quantity, indicating a number of triggers that the first device expects the second device to trigger the first device to transmit the first data; a first interval time, indicating a time interval between two consecutive times the second device triggers the first device to transmit the first data; first indication information, indicating whether the second device is expected to trigger the first device to transmit the first data again; or a first data volume, indicating an amount of the first data to be transmitted.

In the above embodiment, because the first information includes at least one of the first quantity, the first interval time, the first indication information, or the first data volume. After receiving the first information, the second device may, based on the first information, more reasonably trigger the first device to transmit the first data based on a first manner, which makes communication more reliable and efficient.

In combination with some embodiments in the first aspect, in some embodiments, sending the first information to the second device includes one of: sending the first information to the second device via a medium access control control element (MAC CE); sending the first information to the second device via a radio resource control (RRC) message; and sending the first information to the second device via an MAC header of an MAC protocol data unit (PDU).

In the above embodiment, because the first information may be sent by multiplexing the MAC CE, the RRC message, and the MAC header of the MAC PDU, compared to a method requiring an additional dedicated signaling, signaling resources may be saved and resource utilization efficiency may be improved.

In combination with some embodiments in the first aspect, in some embodiments, the first information is carried in an MAC header of the MAC CE; or the first information is carried in an MAC payload of the MAC CE.

In the above embodiment, the first information may be sent via the MAC header or the MAC payload of the MAC CE, which makes a carrying method more flexible.

In combination with some embodiments in the first aspect, in some embodiments, the first data is obtained based on second data.

In the above embodiment, the first data may be obtained based on the second data.

In combination with some embodiments in the first aspect, in some embodiments, the method further includes: dividing the second data packet into at least two segments, in which each segment corresponds to one piece of the first data.

In the above embodiment, since at least two pieces of the first data may be obtained by dividing the second data into the at least two segments. In this way, the first device may send data to the second device by taking the first data as a unit.

In combination with some embodiments in the first aspect, in some embodiments, dividing the second data packet into the at least two segments includes one of: dividing the second data packet into the at least two segments at an MAC layer of the first device; and dividing the second data packet into the at least two segments at an RRC layer of the first device.

In the above embodiment, the second data may be divided into the at least two segments either at the MAC layer or at the RRC layer, which makes a location for dividing the second data more flexible.

In combination with some embodiments in the first aspect, in some embodiments, sending second information and/or third information to the second device, in which the second information indicates that the second data is divided into the at least two segments at the MAC layer of the first device or at the RRC layer of the first device; and the third information indicates that the at least two segments belong to the second data.

In the above embodiment, since the second information indicates that the second data is divided into the at least two segments at the MAC layer of the first device or at the RRC layer of the first device, and the third information indicates that the at least two segments belong to the second data. After receiving the first data, the second device may reassemble the first data into the second data.

In combination with some embodiments in the first aspect, in some embodiments, the third information includes a segment number, or the third information includes a group number, or the third information includes a segment number and a group number, in which the segment number indicates a segment to which the small-packet data belongs, and the group number indicates a large data packet to which the segment belongs.

In the above embodiment, since the segment number indicates the segment to which the small-packet data belongs and the group number indicates the large data packet to which the segment belongs, the second device may reassemble the first data into the second data based on the segment number and/or the group number.

In combination with some embodiments in the first aspect, in some embodiments, the segment number and/or the group number is carried in the MAC header of the MAC CE.

In the above embodiment, the segment number and/or the group number may be carried via the MAC header of the MAC CE.

In combination with some embodiments in the first aspect, in some embodiments, the method further includes one of: allocating a sequence number to each piece of the first data at the MAC layer of the first device, in which the sequence number indicates one piece of the first data; or allocating a sequence number to each piece of the first data at the RRC layer of the first device, in which the sequence number indicates one piece of the first data.

In the above embodiment, the sequence number may be allocated to the each piece of the first data either at the MAC layer of the first device or at the RRC layer of the first device. Thus, a method for allocating the sequence number to the first data is more flexible.

In combination with some embodiments in the first aspect, in some embodiments, sending fourth information to the second device, in which the fourth information indicates that the sequence number is allocated to the first data at the MAC layer of the first device or at the RRC layer of the first device.

In the above embodiment, after receiving the fourth information, the second device may determine that the sequence number is allocated to the first data at the MAC layer of the first device or the RRC layer of the first device, and may sort the first data based on the sequence number.

In combination with some embodiments in the first aspect, in some embodiments, the sequence number is carried in the MAC header of the MAC CE or in an RRC signaling.

In the above embodiment, the sequence number may be carried either in the MAC header of the MAC CE or in the RRC signaling, providing a flexible carrying manner.

In combination with some embodiments in the first aspect, in some embodiments, at least one of the segment number, the group number, or the sequence number corresponding to the first data transmitted within a predetermined time window is used to determine whether the first data is first data expected to receive, and/or at least one of the segment number, the group number, or the sequence number of the first data is used to obtain the second data via sorting and reassembly.

In the above embodiment, after receiving the at least one of the segment number, the group number, and the sequence number within the predetermined time window, the second device may determine whether the first data is the first data expected to receive, and/or the second device may obtain the second data via sorting and reassembly the first data based on the at least one of the segment number, the group number, or the sequence number.

In combination with some embodiments in the first aspect, in some embodiments, the second device is one of: a terminal; a relay device; an integrated access backhaul (IAB) device; and a repeater.

In the above embodiment, according to a second aspect, the embodiments of the present disclosure provide a method for indicating information, performed by a second device, including: receiving first information sent by a first device; and triggering, according to the first information, the first device to transmit at least one piece of first data, in which the first data is small-packet data.

In combination with some embodiments in the second aspect, in some embodiments, the method further includes: sending a first signal to the first device, in which the first signal is sent by the second device according to the first information.

In combination with some embodiments in the second aspect, in some embodiments, the method further includes: receiving the at least one piece of first data transmitted by the first device using a reflected signal of the first signal.

In combination with some embodiments in the second aspect, in some embodiments, the first information includes at least one of: a first quantity, indicating a number of triggers that the first device expects the second device to trigger the first device to transmit the first data; a first interval time, indicating a time interval between two consecutive times the second device triggers the first device to transmit the first data; first indication information, indicating whether the second device is expected to trigger the first device to transmit the first data again; or a first data volume, indicating an amount of the first data to be transmitted.

In combination with some embodiments in the second aspect, in some embodiments, receiving the first information sent by the first device includes one of: receiving the first information sent by the first device via an MAC CE; receiving the first information sent by the first device via an RRC message; and receiving the first information sent by the first device via an MAC header of an MAC PDU.

In combination with some embodiments in the second aspect, in some embodiments, the first information is carried in an MAC header of the MAC CE; or the first information is carried in an MAC payload of the MAC CE.

In combination with some embodiments in the second aspect, in some embodiments, the first data is obtained based on second data.

In combination with some embodiments in the second aspect, in some embodiments, the second data is divided into at least two segments, in which each segment corresponds to one piece of the first data.

In combination with some embodiments in the second aspect, in some embodiments, the second data is divided into the at least two segments at an MAC layer or at an RRC layer.

In combination with some embodiments in the second aspect, in some embodiments, the method further includes: receiving second information and/or third information sent by the first device, in which the second information indicates that the second data is divided into the at least two segments at the MAC layer of the first device or at the RRC layer of the first device; and the third information indicates that the at least two segments belong to the second data, and the each segment corresponds to one piece of the first data.

In combination with some embodiments in the second aspect, in some embodiments, the third information includes a segment number, or the third information includes a group number, or the third information includes a segment number and a group number, in which the segment number indicates a segment to which the first data belongs, and the group number indicates the second data to which the segment belongs.

In combination with some embodiments in the second aspect, in some embodiments, the segment number and/or the group number is carried in the MAC header of the MAC CE.

In combination with some embodiments in the second aspect, in some embodiments, the method further includes: determining, according to at least one of the segment number, the group number, or the sequence number corresponding to the first data received within a predetermined time window, whether the small-packet data is first data expected to receive.

In combination with some embodiments in the second aspect, in some embodiments, the method further includes: receiving fourth information sent by the first device, in which the fourth information indicates that the sequence number is allocated to the first data at the MAC layer of the first device or at the RRC layer of the first device.

In combination with some embodiments in the second aspect, in some embodiments, the sequence number is carried in the MAC header of the MAC CE or in an RRC message.

In combination with some embodiments in the second aspect, in some embodiments, at least one of the segment number, the group number, or the sequence number corresponding to the first data received within the predetermined time window is used to determine whether the first data is first data expected to receive, and/or at least one of the segment number, the group number, or the sequence number of the first data is used to obtain the second data via sorting and reassembly.

In combination with some embodiments in the second aspect, in some embodiments, the second device is one of: a terminal; a relay device; an IAB device; and a repeater.

According to a third aspect, the embodiments of the present disclosure provide a method for indicating information, including: sending, by a first device, first information to a second device, in which the first information is configured to indicate the second device to trigger the first device to transmit at least one piece of first data, and the first data is small-packet data.

According to a fourth aspect, the embodiments of the present disclosure provide a first device, including: a transceiver module, configured to send first information to a second device, in which the first information is configured to indicate the second device to trigger the first device to transmit at least one piece of first data, and the first data is small-packet data.

According to a fifth aspect, the embodiments of the present disclosure provide a second device, including: a transceiver module, configured to receive first information sent by a first device; and a processing module, configured to: trigger, according to the first information, the first device to transmit at least one piece of first data, in which the first data is small-packet data.

According to a sixth aspect, the embodiments of the present disclosure provide a system for indicating information, including a first device and a second device, in which the first device is configured to implement the method for indicating information described in the implementations of the first aspect, and the second device is configured to implement the method for indicating information described in the implementations of the second aspect.

According to a seventh aspect, the embodiments of the present disclosure provide a first device, including: one or more processors, in which the first device is configured to implement the method for indicating information provided in the first aspect.

According to an eighth aspect, the embodiments of the present disclosure provide a second device, including: one or more processors, in which the second device is configured to implement the method for indicating information provided in the second aspect.

According to a ninth aspect, the embodiments of the present disclosure provide a storage medium for storing instructions that, when executed by a communication device, cause the communication device to implement the method for indicating information described in the implementations of the first aspect and the second aspect.

According to a tenth aspect, the embodiments of the present disclosure provide a program product. When the program product is executed by a communication device, the communication device is caused to implement the method described in the implementations of the first aspect and the second aspect.

According to an eleventh aspect, the embodiments of the present disclosure provide a computer program. When the computer program is executed on a computer, the computer is caused to implement the method described in the implementations of the first aspect and the second aspect.

According to a twelfth aspect, the embodiments of the present disclosure provide a chip or a chip system. The chip or the chip system includes a processing circuit, configured to implement the method described in the implementations of the first aspect and the second aspect.

It may be understood that the first device, the second device, the communication system, the storage medium, the program product, the computer program, and the chip or the chip system are all configured to implement the method proposed by the embodiments of the present disclosure. Therefore, for beneficial effects they may achieve reference may be made to the beneficial effects in the corresponding method, which are not repeated here.

The embodiments of the present disclosure provide a method for indicating information, a first device, a second device, a communication system and a storage medium. In some embodiments, terms such as "method for indicating information", "method for processing information", and "method for transmitting information" may be replaced with each other, and terms such as "communication system" and "system for processing information" may be replaced with each other.

The embodiments of the present disclosure are not exhaustive and only serve as illustrations of some embodiments, but not as specific limitations to the protection scope of the present disclosure. Without conflict, each step in an embodiment may be implemented as an independent embodiment, and steps may be arbitrarily combined. For example, a solution obtained by removing some steps from an embodiment may also be implemented as an independent embodiment. A sequence of steps in an embodiment may be arbitrarily exchanged. In addition, implementations in an embodiment may be arbitrarily combined. Furthermore, different embodiments may be arbitrarily combined. For example, some or all steps of different embodiments may be arbitrarily combined, and an embodiment may be arbitrarily combined with implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In the embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "at least one of A or B", "in a case A, in another case B", and "in response to a case A, in response to another case B" in the present disclosure, depending on situations, may include at least one of the following solutions: performing A in some implementations (performing A independently of B); performing B in some implementations (performing B independently of A); selecting one of A or B for execution in some implementations (selectively performing A or B); and performing A and B in some implementations (performing both A and B). The similar principle applies when there are more parts such as A, B, C, etc.

In some embodiments, expressions such as "A or B", depending on situations, may include the following technical solutions: performing A in some implementations (performing A independently of B); performing B in some implementations (performing B independently of A); and selecting one of A or B for execution in some implementations (selectively performing A or B). The similar principle applies when there are more parts such as A, B, C, etc.

The terms such as "first" and "second" added in front of other words in the embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "field", ordinal numbers before the "field" in "first field" and "second field" do not limit a position or a sequence between fields. "First" and "second" do not limit whether modified "fields" are in the same message, nor do an order of the "first field" and the "second field." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects modified by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "comprising A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "no less than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "device" and "apparatus" may be interpreted as either physical or virtual. Names are not limited to those recorded in the embodiments. The terms such as "equipment", "device", "circuit", "network element", "node", "function", "unit", "section", "system", "network", "chip", "chip system", "entity", "subject", etc. may be used interchangeably.

In some embodiments, "network" may be interpreted as an apparatus included in a network, for example, an access network device, a core network device, etc.

In some embodiments, "access network device (AN device)" may also be called "radio access network device (RAN device)", "base station (BS)", "radio base station", "fixed station" in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, obtaining data, information, etc. shall comply with laws and regulations of a country where it is located.

In some embodiments, data, information, etc. may be obtained after agreed by a user.

Each element, row, or column in tables involved in the present disclosure may be implemented as an independent embodiment. A combination of any element, row, or column may also be implemented as an independent embodiment.

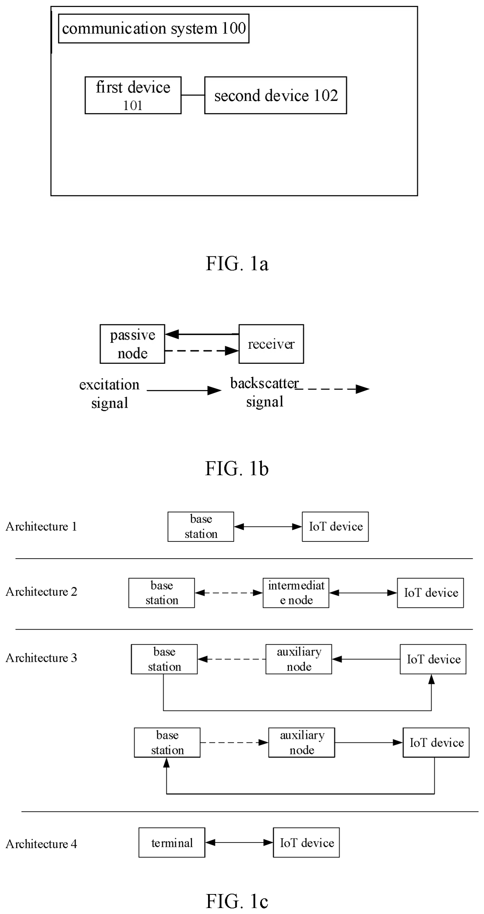

FIG. 1a is a schematic diagram of a communication system according to the embodiments of the present disclosure.

As shown in FIG. 1a, a communication system 100 includes a first device (for example, terminal) 101 and a second device 102.

In some embodiments, the first device 101 may be an ambient IOT device.

In some embodiments, the second device 102 may be a relay device, an IAB device, a UE, a repeater, etc.

In some embodiments, the second device 102 may include at least one of a first device, an access network device, or a core network device.

In some embodiments, the first device 101 includes, for example, at least one of a mobile phone, a wearable device, an IOT device, an automobile with a communication function, a smart car, a pad, a computer with a wireless transceiver function, a virtual reality (VR) first device, an augmented reality (AR) first device, a wireless first device in industrial control, a wireless first device in self-driving, a wireless first device in remote medical surgery, a wireless first device in smart grid, a wireless first device in transportation safety, a wireless first device in smart city, or a wireless first device in smart home, but is not limited thereto. In some embodiments, the access network device may be, for example, a node or device that connects the first device to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (WiFi) system, which is not limited herein.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited herein.

In some embodiments, the core network device may be a device including one or more network elements, or may be a plurality of devices or device groups, each of which includes all or part of the above one or more network elements. The network elements may be virtual or physical. The core network includes, for example, at least one of an evolved packet core (EPC), a 5G core network (5GCN), or a next generation core (NGC).

It may be understood that the communication system in the embodiments of the present disclosure is to clearly illustrate the technical solution of the embodiments of the present disclosure, and does not constitute a limitation on the technical solution in the embodiments of the present disclosure. Those skilled in the art may know, with evolution of the system architecture and emergence of new service scenarios, the technical solution in embodiments of the disclosure is also applicable to similar technical problems.

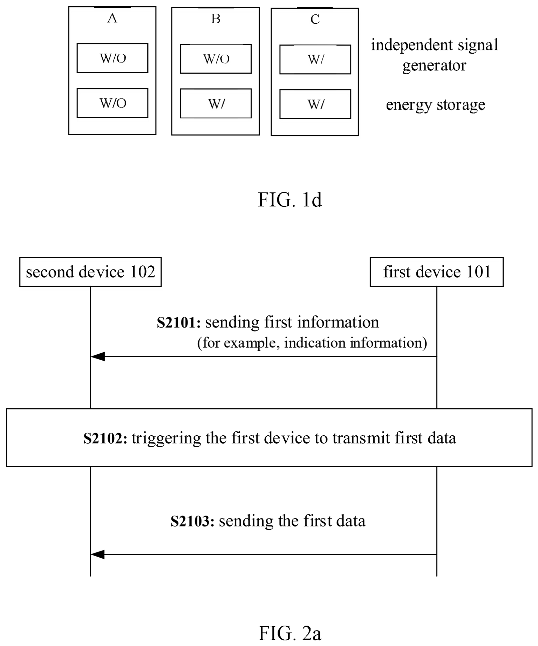

The following embodiments of the present disclosure may be applied to the communication system 100 shown in FIG. 1a, or to some entities, which are not limited to this. Entities in FIG. 1a are illustrative. The communication system may include all or some of the entities in FIG. 1, or may include other entities not shown in FIG. 1a. The entities may be in any number and in any form. Connection relationships between the entities are illustrative. The entities may be unconnected or may be connected. They may be connected in any manner, for example, they may be directly connected or indirectly connected, or may be connected via a wired or wireless way.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMM), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them, etc. In addition, a combination of a plurality of systems (e.g., a combination of LTE or LTE-A with 5G) may be applied.

In some embodiments, in an IoT network, some IoT devices are typically driven by conventional batteries with a limited lifespan, which has a negative impact on user experience. The astronomical growth of the IoT network and the emergence of a massive number of IoT devices have driven maintenance expenditures, including labor and battery costs, to an entirely new level. Billions of conventional batteries are discarded annually, with only a small portion of them being effectively recycled, which causes adverse impacts on the ecosystem of the earth. In some extreme environmental conditions, maintaining the operation of the IoT network and replacing batteries may be very challenging. In this regard, battery-free IoT communication is proposed, which will improve network performance and sustainability and expand application scenarios. Furthermore, battery-free communication is more environmentally friendly and safer, particularly for children and the elderly. By eliminating conventional batteries, the size and cost of a device may be significantly reduced, which paves the way for various new applications.

In some embodiments, in the 5th generation mobile communication technology (5G) era, various low power wide area (LPWA) technologies have been developed, for example, machine type communication (MTC), narrow band Internet of Things (NB-IoT), reduced capability (RedCap), etc., to meet the growing demands of vertical industries. These LPWA technologies achieve low cost, low power consumption, and massive connectivity, which may meet requirements of many applications. However, there are still many use cases and applications that may not be addressed under the following circumstances. First, devices driven by conventional batteries are not applicable, for example in extreme environmental conditions (for example, high pressure, extremely high/low temperature, humid environment). Second, maintenance-free devices are required (for example, without needing to replace conventional batteries of the device). Finally, ultra-low complexity, very small device size/form factor (for example, with a thickness of millimeters), a longer life cycle, etc., are required.

In some embodiments, the ambient IOT device is a promising technology that may meet above unmet needs. The ambient IOT device is an IoT device powered by energy harvesting, characterized by being battery-free or having a limited energy storage capacity (for example, using capacitors), and powered by harvesting radio waves, light, motion, heat, or any other suitable power supply.

In some embodiments, energy obtained from the environment may drive sensor node for data transmission and wireless communication. Transmit and receive power consumption of current mainstream low-power IoT communication chips is in a range of several tens of milliwatts or even several hundred milliwatts, while energy harvested from the environment only provides power at a microwatt level, which may not drive these types of nodes to work. Therefore, brand-new wireless communication technologies are needed to reduce communication energy consumption to tens of microwatts or even below ten microwatts. Currently, a mainstream method employs backscatter communication technology. Backscatter communication is one of the key technologies for building a green, energy-saving, low-cost, and flexibly-deployable future IoT, and is an important means to achieve "intelligent Internet of Everything (IIoE)".

In some embodiments, referring to FIG. 1b, the backscatter communication designs an extremely low-power modulation and transmission technology designed based on the principle of radio frequency signal backscattering. The backscatter communication is first proposed by Stockman. Since part of a radio frequency signal is reflected when the radio frequency signal reaches a surface of an object, a sending node adjusts a matching relationship between its receiving antenna and its impedance according to information to be sent so as to enhance reflection of an incident radio frequency signal, and modulates sensor data obtained by itself onto the reflected signal so as to complete data transmission. This process is similar to a retroreflector. Compared to other communication technologies, the backscatter communication does not require a complex radio frequency structure, which reduces a use of components such as power amplifiers, high-precision crystal oscillators, duplexers, high-precision filters, etc., and does not require complex baseband processing. Therefore, it may simplify a design of a terminal and significantly reduce a cost of a terminal node.

In some embodiments, the backscatter communication is widely used in a radio frequency identification (RFID) system, which forms a large number of large-scale commercial cases. Its working principle is that a receiver (generally an RFID reader) sends a radio frequency excitation signal to activate a passive node (generally an RFID electronic tag). The electronic tag modulates its own information onto the radio frequency excitation signal using the backscatter communication. The reader receives and demodulates a reflected signal from a passive electronic tag, which achieves information transmission.

In some embodiments, RFID technology also has numerous drawbacks, for example, a short coverage distance (during communication, a wireless signal experiences round-trip dual-path fading, which results in large pathloss and a short effective communication distance), single-channel transmission, the requirement for strict alignment with a tag, and the absence of power control, etc. The RFID technology has significant room for improvement in terms of communication performance. It is necessary to integrate 3GPP communication technology to improve wireless communication performance of the RFID technology for passive IoT scenarios.

Such desired new IoT devices are expected to have characteristics of low memory, low processing capability, ultra-low power consumption, small-volume data transmission, and massive deployment. The ambient IOT device may be maintenance-free and have an extended service life (for example, over 10 years).

Such a new type of the IOT device needs to obtain energy by collecting radio waves sent by a network node before it may drive itself to work. Therefore, before obtaining the energy, the IOT device is usually in an "off" state, i.e., an out-of-network state. For this reason, the communication system needs to support a data communication method with a shorter transmission duration, lower memory consumption, and more convenient terminal management so as to complete the data communication process as quickly as possible.

In some embodiments, referring to FIG. 1c, **there is illustrated a wireless communication network architecture** for realizing communication of **ambient energy-powered devices** based on backscatter technology.

Architecture 1: An ambient IOT device **(capable** of **harvesting ambient energy)** and a base station directly perform downlink (DL) and uplink (UL) data reception and transmission.

Architecture 2: The ambient IOT device and the base station indirectly perform DL and UL data reception and transmission, **with one or more intermediate nodes acting as forwarders,** for example, the intermediate node may be a relay, integrated access and backhaul (IAB), a UE, and a repeater.

Architecture 3: The ambient IOT device and the base station directly perform **either DL or UL data reception or transmission** therebetween, and there is an auxiliary node on a UL or a DL. The auxiliary node is responsible for receiving or sending UL data or receiving DL data. For example, the auxiliary node may be a relay, IAB, a UE, and a repeater.

Architecture 4: The ambient IOT device and the UE directly perform DL and UL data reception and transmission, and the UE is responsible for collecting data and forwarding the collected data to a network side.

In some embodiments, referring to FIG. 1d, the ambient IOT device may be divided into three types.

Device A: without no energy storage and without independent signal generation/amplification, i.e., backscatter transmission.

Device B: with energy storage, but without independent signal generation, i.e., backscatter transmission. The use of stored energy may include amplification of a reflected signal.

Device C: with energy storage and with independent signal generation, i.e., an active RF component for transmission.

In some embodiments, the terminal supports small data transmission (SDT). In LTE early data transmission (EDT), one-shot SDT is supported, i.e., SDT with only one data packet is supported. In new radio (NR) SDT, SDT of a plurality of consecutive packets is supported.

In some embodiments, the SDT transmits data based on orthogonal frequency division multiplexing (OFDM) waveforms and network-side scheduling. The terminal reports a buffer status report (BSR), and the base station knows that the UE has small-packet data to be transmitted. The base station performs scheduling to achieve continuous SDT. In the related art, **it** is **assumed that a terminal is powered on,** meaning that **the power level** is not a factor affecting **the scheduling of the base station.**

FIG. 2a is an interaction schematic diagram of a method for indicating information according to an embodiment of the present disclosure. As shown in FIG. 2a, the embodiments of the present disclosure relate to a method for indicating information, performed by a communication system 100. The method includes the following steps at S2101 to S2103.

At S2101, a first device sends first information to a second device.

In some embodiments, the second device receives the first information sent by the first device.

In some embodiments, the first information may be indication information.

In some embodiments, the first information is configured to indicate the second device to trigger the first device to transmit at least one piece of first data.

In some embodiments, first data among the at least one piece of first data is small-packet data.

In some embodiments, the first information indicates the second device to trigger the first device to transmit continuous small-packet data based on a first manner.

In some embodiments, the first information indicates the second device to triggers the first device to transmit the small-packet data based on a first manner.

In some embodiments, the first information indicates triggering the second device to send a first signal to the first device.

In some embodiments, the first signal may be an excitation signal.

In some embodiments, the first manner is a manner in which the first device sends data by using ambient energy.

In some embodiments, the first manner is a manner in which the first device sends data to the second device using a reflected signal of the first signal.

In some embodiments, the first device receives the first signal sent by the second device, and the first signal is sent by the second device according to the first information.

In some embodiments, the at least one piece of first data is sent using the reflected signal of the first signal.

In some embodiments, the first information includes at least one of: a first quantity, indicating a number of triggers that the first device expects the second device to trigger the first device to transmit the first data; a first interval time, indicating a time interval between two consecutive times that the second device triggers the first device to transmit the first data; first indication information, indicating whether the second device is expected to trigger the first device to transmit the first data again; or a first data volume, indicating an amount of the first data to be transmitted.

In some embodiments, the first information indicates the number of triggers expected by the first device for transmitting the small-packet data, so as to achieve continuous transmission of the small-packet data.

In some embodiments, the number of triggers may include a number of current triggers and/or a number of expected triggers after the current triggers.

In some embodiments, the first interval time indicates the minimum time interval between the two consecutive times the second device triggers the first device to transmit the first data.

In some embodiments, the first indication information may be indicated by an information field. The information field may include one bit (not limited to one bit). For example, when the bit takes a value of "0", the bit indicates no expectation for triggering transmission of the small-packet data again; and when the bit takes a value of "1", the bit indicates expectation for triggering the transmission of the small-packet data again.

In some embodiments, an amount of the small-packet data to be transmitted indicated may be X bytes.

In some embodiments, the first device transmits the first information to the second device via an MAC CE.

In some embodiments, the first device transmits the first information to the second device via an RRC message.

In some embodiments, the first device transmits the first information to the second device via an MAC header of an MAC PDU. It needs to be noted that PDU in the present disclosure may also be a packet data unit. "Packet data unit" and "protocol data unit" may be used interchangeably.

In some embodiments, the first information is carried in an MAC header of the MAC CE; or the first information is carried in an MAC payload of the MAC CE.

In some embodiments, the first data is obtained based on second data.

In some embodiments, the second data may be a large data packet.

In some embodiments, the first device divides the second data into at least two segments, in which each segment corresponds to one piece of the first data. In this way, at least two pieces of the first data may be obtained.

In some embodiments, the first device divides the second data into the at least two segments at an MAC layer of the first device.

In some embodiments, the first device divides the second data into the at least two segments at an RRC layer of the first device.

In some embodiments, the first device sends second information to the second device, in which the second information indicates that the second data is divided into the at least two segments at the MAC layer of the first device or at the RRC layer of the first device.

In some embodiments, the first device sends third information to the second device, in which the third information indicates that the at least two segments belong to the second data.

In some embodiments, the third information includes a segment number, or the third information includes a group number, or the third information includes the segment number and the group number, in which the segment number indicates the segment to which the first data belongs, and the group number indicates the second data to which the segment belongs.

In some embodiments, the segment number and/or the group number is carried in the MAC header of the MAC CE.

In some embodiments, segmentation or grouping of the second data is executed at the MAC layer.

For example, the first device may divide the second data into 3 segments at the MAC layer, which are segment 1, segment 2, and segment 3 respectively. Segment 1, segment 2, and segment 3 may belong to the same group. Segments within the group are segments divided from the second data. Each segment may correspond to one segment number, and each group may correspond to one group number. Each segment may correspond to one piece of the first data, and each group may correspond to one piece of the second data. In this way, after learning the segment number and group number, the second device may reassemble corresponding first data into one piece of the second data.

In some embodiments, at least one of the segment number or the group number corresponding to the first data transmitted within a predetermined time window is used by the second device to determine whether the first data is first data expected to receive.

In some embodiments, at least one of the segment number or the group number of the first data is used by the second device to obtain the second data via sorting and reassembly.

It needs to be noted that the reason for the large data packet may be that redundant repetition of a data stream to be transmitted is performed at the MAC layer or the RRC layer, and the second device may indicate a number of redundant repetitions in the first signal, in which the number of redundant repetitions may be system-fixed or protocol-fixed.

In some embodiments, the first device allocates a sequence number to each piece of the first data at the MAC layer of the first device.

In some embodiments, the first device allocates a sequence number to each piece of the first data at the RRC layer of the first device.

In some embodiments, the first device sends fourth information to the second device, in which the fourth information indicates that the sequence number is allocated to the first data at the MAC layer of the first device or at the RRC layer of the first device.

In some embodiments, the sequence number corresponding to the first data transmitted within a predetermined time window is used by the second device to determine whether the first data is the first data expected to receive.

In some embodiments, the sequence number of the first data is used by the second device to obtain the second data via sorting and reassembly.

In some embodiments, at least one of the segment number, the group number, or the sequence number may be indicated by 2 bits.

At S2102, the second device triggers the first device to transmit first data.

In some embodiments, the second device sends the first signal to the first device, and the reflected signal of the first signal is used by the first device to send the first data to the second device.

In some embodiments, for one trigger, the second device sends the first signal once to the first device, and the reflected signal of the first signal is used by the first device to send the first data once to the second device.

At S2103, the first device sends the first data.

In some embodiments, the first device receives the first signal sent by the second device, and the first device sends the first data to the second device using the reflected signal of the first signal.

In some embodiments, for one trigger, the second device sends the first signal once to the first device, and the first device sends the first data once to the second device using the reflected signal of the first signal.

In some embodiments, for the first quantity, a relationship between a first index and the first quantity may be established. The first information may be reported to the second device by reporting the first index.

For example, please refer to Table 1.

**Table 1**

| first index | first quantity |
|---|---|
| 0 | 1 |
| 1 | 5 |
| 2 | 10 |
| 3 | 30 |

In some embodiments, for the first time interval, a relationship between a second index and the first time interval may be established. The first information may be reported to the second device by reporting the second index.

For example, please refer to Table 2.

**Table 2**

| second index | first time interval |
|---|---|
| 0 | 100 |
| 1 | 500 |
| 2 | 1000 |
| 3 | 3000 |

In some embodiments, for the first data volume, a relationship between a third index and the first data volume may be established. The first information may be reported to the second device by reporting the third index.

For example, please refer to Table 3.

**Table 3**

| third index | first data volume |
|---|---|
| 1 | 4 |
| 2 | 8 |
| 3 | 16 |

In some embodiments, the term "information" may be interchangeably used with terms such as "message", "signal", "signaling", "report", "configuration", "indication", "instruction", "command", "channel", "parameter", "domain", and "data".

In some embodiments, the term "send" may be interchangeably used with terms such as "emit", "report", and "transmit".

The method for indicating information involved in the embodiments of the present disclosure may include at least one of S2101 to S2103. For example, S2101 may be implemented as an independent embodiment, S2102 may be implemented as an independent embodiment, and S2103 may be implemented as an independent embodiment. For example, S2101 in combination with S2103 may be implemented as an independent embodiment, and S2102 in combination with S2103 may be implemented as an independent embodiment, but is not limited thereto.

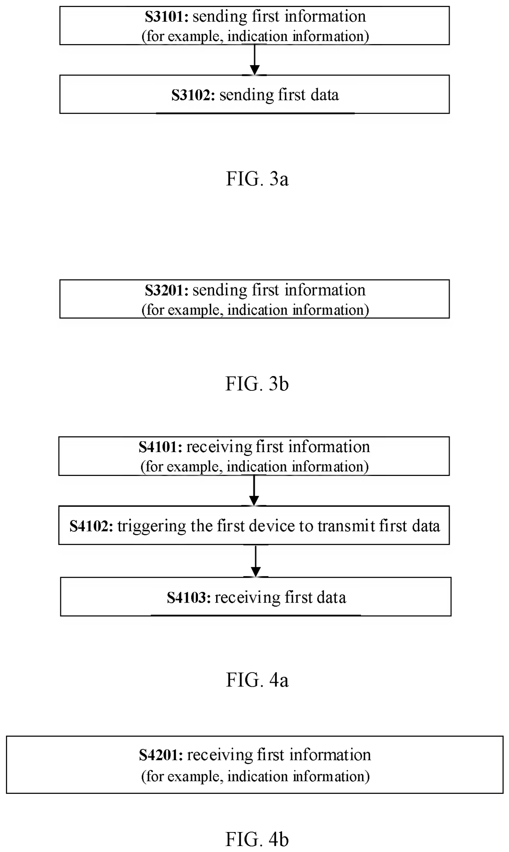

FIG. 3a is a flowchart of a method for indicating information according to an embodiment of the present disclosure. As shown in FIG. 3a, embodiments of the present disclosure relate to a method for indicating information, performed by a first device 101. The method includes the following steps at S3101 to S3102.

At S3101, first information is sent.

In some embodiments, for implementations of S3101 reference may be made to implementations of S2101 in FIG. 2a, and other related parts in the embodiments related to FIG. 2a, and details are not repeated here.

At S3102, first data is sent.

In some embodiments, for implementations of S3102 reference may be made to implementations of S2103 in FIG. 2a, and other related parts in the embodiments related to FIG. 2a, and details are not repeated here.

The method for indicating information involved in the embodiments of the present disclosure may include at least one of S3101 to S3103. For example, S3101 may be implemented as an independent embodiment, S3102 may be implemented as an independent embodiment, and S3103 may be implemented as an independent embodiment. For example, S3101 in combination with S3103 may be implemented as an independent embodiment, and S3102 in combination with S3103 may be implemented as an independent embodiment, but is not limited thereto.

FIG. 3b is a flowchart of a method for indicating information according to an embodiment of the present disclosure. As shown in FIG. 3b, embodiments of the present disclosure relate to a method for indicating information, performed by a first device 101. The method includes the following step at 3201.

At S3201, first information is sent.

In some embodiments, the first information is configured to indicate the second device to trigger the first device to transmit at least one piece of first data, and the first data is small-packet data.

In some embodiments, for implementations of S3201 reference may be made to implementations of S2101 in FIG. 2a, and other related parts in the embodiments related to FIG. 2a, and details are not repeated here.

In some embodiments, the method further includes: receiving a first signal sent by the second device, in which the first signal is sent by the second device according to the first information.

In some embodiments, the method further includes: transmitting the at least one piece of first data using a reflected signal of the first signal.

In some embodiments, the first information includes at least one of: a first quantity, indicating a number of triggers that the first device expects the second device to trigger the first device to transmit the first data; a first interval time, indicating a time interval between two consecutive times that the second device triggers the first device to transmit the first data; first indication information, indicating whether the second device is expected to trigger the first device to transmit the first data again; or a first data volume, indicating an amount of the first data to be transmitted.

In some embodiments, sending the first information to the second device includes one of: sending the first information to the second device via an MAC CE; sending the first information to the second device via an RRC message; and sending the first information to the second device via an MAC header of an MAC PDU.

In some embodiments, the first information is carried in an MAC header of an MAC CE; or the first information is carried in an MAC payload of an MAC CE.

In some embodiments, the first data is obtained based on second data.

In some embodiments, the method further includes: dividing the second data into at least two segments, in which each segment corresponds to one piece of the first data.

In some embodiments, dividing the second data into the at least two segments includes one of: dividing the second data into the at least two segments at an MAC layer of the first device; and dividing the second data into the at least two segments at an RRC layer of the first device.

In some embodiments, the method further includes: sending second information and/or third information to the second device, in which the second information indicates that the second data is divided into the at least two segments at an MAC layer of the first device or at an RRC layer of the first device; and the third information indicates that the at least two segments belong to the second data.

In some embodiments, the third information includes a segment number, or the third information includes a group number, or the third information includes a segment number and a group number, in which the segment number indicates a segment to which the first data belongs, and the group number indicates the second data to which the segment belongs.

In some embodiments, the segment number and/or the group number is carried in an MAC header of an MAC CE.

In some embodiments, the method further includes one of: allocating a sequence number to each piece of the first data at an MAC layer of the first device, in which the sequence number indicates one piece of the first data; or allocating a sequence number to each piece of the first data at an RRC layer of the first device, in which the sequence number indicates one piece of the first data.

In some embodiments, the method further includes: sending fourth information to the second device, in which the fourth information indicates that the sequence number is allocated to the first data at the MAC layer of the first device or at the RRC layer of the first device.

In some embodiments, the sequence number is carried in an MAC header of an MAC CE or in an RRC message.

In some embodiments, at least one of the segment number, the group number, or the sequence number corresponding to the first data transmitted within a predetermined time window is used to determine whether the first data is first data expected to receive, and/or at least one of the segment number, the group number, or the sequence number of the first data is used to obtain the second data via sorting and reassembly.

In some embodiments, the second device is one of: a terminal; a relay device; an IAB device; and a repeater.

FIG. 4a is a flowchart of a method for indicating information according to an embodiment of the present disclosure. As shown in FIG. 4a, embodiments of the present disclosure relate to a method for indicating information, performed by a second device 102. The method includes the following steps at S4101 to S4103.

At S4101, first information is received.

In some embodiments, for implementations of S4101 reference may be made to implementations of S2101 in FIG. 2a, and other related parts in the embodiments related to FIG. 2a, and details are not repeated here.

In some embodiments, the second device receives the first information sent by a first device, but is not limited thereto, and may also receive first information sent by other entities.

In some embodiments, the second device obtains first information specified by a protocol.

In some embodiments, the second device obtains first information from an upper layer(s).

In some embodiments, the second device obtains first information by performs processing.

In some embodiments, S4102 is omitted, and the first device autonomously implements a function indicated by the first information, or the above function is default or preconfigured.

At S4102, the first device is triggered to transmit first data.

For implementations of S4102 reference may be made to implementations of S2102 in FIG. 2a, and other related parts in the embodiments related to FIG. 2a, and details are not repeated here.

At S4103, first data is received.

The method for indicating information involved in the embodiments of the present disclosure may include at least one of S4101 to S4103. For example, S4101 may be implemented as an independent embodiment, and S4102 may be implemented as an independent embodiment. For example, S4101 in combination with S4102 may be implemented as an independent embodiment, but is not limited thereto.

FIG. 4b is a flowchart of a method for indicating information according to an embodiment of the present disclosure. As shown in FIG. 4b, embodiments of the present disclosure relate to a method for indicating information, performed by a second device 102. The method includes the following step at S4201.

At S4201, first information is received.

In some embodiments, the first information is configured to indicate the second device to trigger the first device to transmit at least one piece of first data, and the first data is small-packet data.

In some embodiments, the second device, based on the first information, triggers the first device to transmit the at least one piece of first data, and the first data is the small-packet data.

In some embodiments, for implementations of S4201 reference may be made to implementations of S2101 in FIG. 2a, and other related parts in the embodiments related to FIG. 2a, and details are not repeated here.

In some embodiments, the method further includes: sending a first signal to the first device, in which the first signal is sent by the second device according to the first information.

In some embodiments, the method further includes: receiving the at least one piece of first data transmitted by the first device using a reflected signal of the first signal.

**In** some embodiments, the first information includes at least one of: a first quantity, indicating a number of triggers that the first device expects the second device to trigger the first device to transmit the first data; a first interval time, indicating a time interval between two consecutive times that the second device triggers the first device to transmit the first data; first indication information, indicating whether the second device is expected to trigger the first device to transmit the first data again; or a first data volume, indicating an amount of the first data to be transmitted.

In some embodiments, receiving the first information sent by the first device includes one of: receiving the first information sent by the first device via an MAC CE; receiving the first information sent by the first device via an RRC message; and receiving the first information sent by the first device via an MAC header of an MAC PDU.

**In** some embodiments, the first information is carried in an MAC header of an MAC CE; or the first information is carried in an MAC payload of an MAC CE.

In some embodiments, the first data is obtained based on second data.

In some embodiments, the second data is divided into at least two segments, in which each segment corresponds to one piece of the first data.

In some embodiments, the second data is divided into the at least two segments at an MAC layer or at an RRC layer.

In some embodiments, the method further includes: receiving second information and/or third information sent by the first device, in which the second information indicates that the second data is divided into the at least two segments at an MAC layer of the first device or at an RRC layer of the first device; and the third information indicates that the at least two segments belong to the second data, and each segment corresponds to one piece of the first data.

In some embodiments, the third information includes a segment number, or the third information includes a group number, or the third information includes a segment number and a group number, in which the segment number indicates a segment to which the first data belongs, and the group number indicates the second data to which the segment belongs.

In some embodiments, the segment number and/or the group number is carried in an MAC header of an MAC CE.

In some embodiments, the method further includes: determining, according to at least one of the segment number, the group number, or a sequence number corresponding to the first data received within a predetermined time window, whether the small-packet data is first data expected to receive.

In some embodiments, the method further includes: receiving fourth information sent by the first device, in which the fourth information indicates that a sequence number is allocated to the first data at an MAC layer of the first device or at an RRC layer of the first device.

In some embodiments, the sequence number is carried in an MAC header of an MAC CE or in an RRC message.

In some embodiments, at least one of the segment number, the group number, or the sequence number corresponding to the first data received within the predetermined time window is used to determine whether the first data is first data expected to receive, and/or at least one of the segment number, the group number, or the sequence number of the first data is used to obtain the second data via sorting and reassembly.

In some embodiments, the second device is one of: a terminal; a relay device; an IAB device; and a repeater.

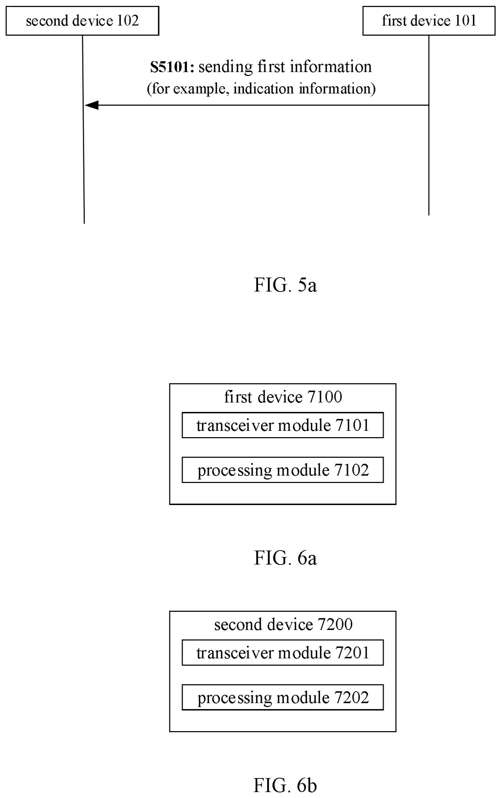

FIG. 5a is an interaction schematic diagram of a method for indicating information according to an embodiment of the present disclosure. As shown in FIG. 5a, embodiments of the present disclosure relate to a method for indicating information, used for a communication system 100. The method includes the following step at S5101.

At S5101, the first device sends first information to the second device.

In some embodiments, the first information is configured to indicate the second device to trigger the first device to transmit at least one piece of first data, and the first data is small-packet data.

For implementations of S5101 reference may be made to implementations of S2101 in FIG. 2a and other related parts in the embodiments related to FIG. 2a, and are not repeated here.

In some embodiments, the above method may include methods of the embodiments related to a communication system side, a first device side, a network device side, etc., and are not repeated here.

The embodiments of the present disclosure relate to a method for indicating information. To better understand the technical solution of the present disclosure, the technical solution of the present disclosure is further described below via three embodiments.

### Example 1:

In some embodiments, a terminal capability provides auxiliary information (corresponding to the first information in the present disclosure) to assist the base station in triggering an excitation signal (corresponding to the first signal in the present disclosure) to achieve continuous SDT. For example, the following three options are included.

Option 1: An ambient IOT device indicates to a base station a number of triggers expected by the ambient IOT device to achieve continuous SDT. The number of triggers expected by the ambient IOT device may include the current trigger or a number of expected triggers after the current transmission. In some embodiments, the ambient IOT device may further indicate the minimum time interval for each trigger.

Option 2: The ambient IOT device indicates to the base station another trigger that the ambient IOT device expects, for example, via a 1-bit indication. A value of 0 indicates that another trigger is not expected, and a value of 1 indicates that another trigger is expected. In some embodiments, the ambient IOT device may further indicate the minimum time interval for each trigger, i.e., a time interval from the start of the current trigger to the next trigger, or a time interval from the start of the current transmission to the next trigger.

Option 3: The ambient IOT device indicates to the base station the data volume of data to be transmitted, i.e., X byte. In some embodiments, the ambient IOT device may further indicate the minimum time interval for each trigger.

For the above three options, the indication information may be included in the MAC CE, or included in the MAC header, or included in the RRC signaling, in which the RRC signaling carries data to be transmitted.

### Example 2:

In some embodiments, a multi-packet data transmission results from segmentation of the large data packet. For example, the following two options are included.

Option 1: Segmentation or grouping of reported data (corresponding to the small-packet data in the present disclosure) is performed at the MAC layer. The MAC header includes the segment number of the segmentation or the group number of the grouping, and/or indication information, in which the indication information indicates that all segments belong to one data report.

Option 2: The segmentation or the grouping of the reported data is performed at the RRC layer. The RRC signaling includes the segment number of the segmentation or the group number of the grouping, and/or the indication information, in which the indication information indicates that all segments belong to one data report.

For option 1 and 2, the segment number or the group number therein is also used to identify newness/oldness or sorting of data. The indication information may be an integer value of 1 bit or 2 bit, considering that an amount of ambient IOT data is not large.

The reason for the large data packet may be that redundant repetition of the data stream to be transmitted is performed at the MAC layer or the RRC layer, and the base station indicates the number of redundant repetitions of the ambient IOT device in the excitation signal, or the number of redundant repetitions may be system-fixed or protocol-fixed.

### Example 3 :

In some embodiments, the multi-packet data transmission inherently involves a plurality of data packets. For example, the following two options are included.

Option 1: A sequence number of the reported data is allocated and added at the MAC layer, and reordering is performed at the MAC layer of a receiving end, with the sequence number included in the MAC header.

Option 2: The sequence number of the reported data is allocated and added at the RRC layer, and the reordering is performed at the RRC layer of the receiving end, with the sequence number included in the RRC signaling.

For option 1 and 2, the sequence number therein is also used to identify newness/oldness or sorting of data. The sequence number may be an integer value of 2 bit, considering that the amount of ambient IOT data is not large.

In the embodiments of the present disclosure, some or all steps and/or implementations thereof may be arbitrarily combined with some or all steps and/or implementations in other embodiments.

In the embodiments of the present disclosure, some or all steps and/or implementations thereof may be arbitrarily combined with some or all steps and/or implementations in other embodiments.

The embodiments of the present disclosure are directed to passive IoT terminals. Different terminal types and different capacitance sizes affect a data transmission capability of the terminal, an interval between data transmissions, and so on. The embodiments of the present disclosure define the data transmission capability of the terminal and report the data transmission capability of the terminal to the network side to assist the network side in effectively triggering the terminal to perform data reporting.

The embodiments of the present disclosure further provide an apparatus for implementing any one of the above methods. For example, an apparatus is provided, which includes a unit or a module configured to perform steps executed by the device in any one of the above methods. For another example, another apparatus is provided, which includes a unit or a module configured to perform steps executed by a network device (such as an access network device, a functional node of a core network, a core network device, etc.) in any one of the above methods.

It should be understood that the division of units and modules in the above apparatuses is merely a division of logical functions. In actual implementations, the units and modules may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units or modules are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process in which the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 6a is a block diagram of a first device according to the embodiments of the present disclosure. As shown in FIG. 6a, a first device 7100 may include at least one of: a transceiver module 7101 or a processing module 7102. In some embodiments, the above transceiver module is configured to send first information. In some embodiments, the above transceiver module is configured to perform at least one of communication steps such as sending and/or receiving performed by the first device 101 in any one of the above methods (for example, S2101, but not limited to this), which is not repeated here. In some embodiments, the above processing module is configured to perform at least one of other steps performed by the first device 101 in any one of the above methods, which is not repeated here.

FIG. 6b is a block diagram of a second device according to the embodiments of the present disclosure. As shown in FIG. 6b, a second device 7200 may include at least one of: a transceiver module 7201 or a processing module 7202. In some embodiments, the above transceiver module is configured to send first information. In some embodiments, the above transceiver module is configured to perform at least one of communication steps such as sending and/or receiving performed by the first device 101 in any one of the above methods (for example, S2101, but not limited to this), which is not repeated here. In some embodiments, the transceiver module may include a sending module and/or a receiving module, which may be separate or integrated together. In some embodiments, the transceiver module may be interchangeably used with a transceiver. In some embodiments, the above processing module is configured to perform at least one of other steps (for example, S2102) performed by the second device 102 in any one of the above methods, which is not repeated here.

In some embodiments, the processing module may be one module, or may include a plurality of sub-modules. In some embodiments, the plurality of sub-modules respectively perform all or part of steps required to be performed by the processing module. In some embodiments, the processing module may be interchangeably used with the processor.

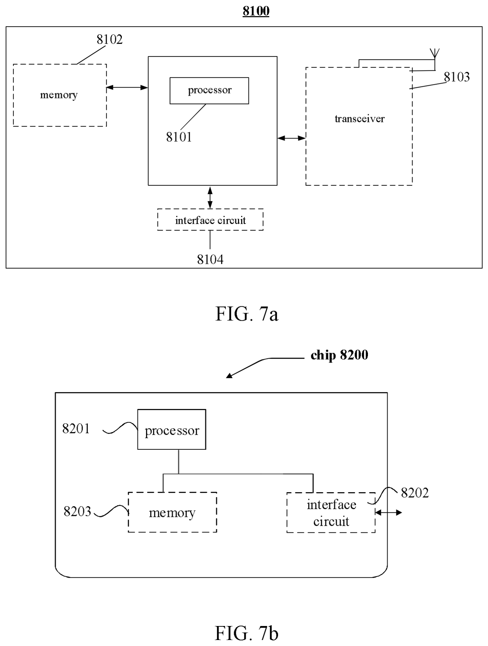

FIG. 7a is a block diagram of a communication device 8100 according to the embodiments of the present disclosure. The communication device 8100 may be a network device (for example, an access network device, a core network device, etc.), or may be a first device (for example, a UE, etc.), or may be a chip, a chip system, or a processor supporting the network device to implement any one of the above methods, or may be a chip, a chip system, or a processor supporting the first device to implement any one of the above methods. The communication device 8100 may be used to implement the methods described in the above method embodiments. For details, reference may be made to descriptions in the above method embodiments.

As shown in FIG. 7a, the communication device 8100 includes one or more processors 8101. The processor 8101 may be a general-purpose processor or a dedicated processor, such as, a baseband processor and a central processing unit. The baseband processor is used for processing communication protocols and communication data. The central processing unit is used for controlling the communication device (e.g., a base station, a baseband chip, a first device, a first device chip, a DU, or a CU, etc.), executing programs, and processing data of the programs. The communication device 8100 is configured to execute any one of the above methods.

In some embodiments, the communication device 8100 further includes one or more memories 8102 for storing instructions. In some embodiments, all or some of the memories 8102 may also be located outside the communication device 8100.

In some embodiments, the communication device 8100 further includes one or more transceivers 8103. When the communication device 8100 includes one or more transceivers 8103, at least one of communication steps such as sending and/or receiving in the above methods (for example, S2101 or S2102, but not limited to these) is implemented by the transceiver 8103, and at least one of the other steps is implemented by the processor 8101 (for example, S2102).

In some embodiments, the transceiver may include a receiver and/or a transmitter, which may be separate or integrated. In some embodiments, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 8100 further includes one or more interface circuits 8104. The interface circuit 8104 is connected to the memory 8102 and may be used to receive signals from the memory 8102 or other devices, or send signals to the memory 8102 or other devices. For example, the interface circuit 8104 may read instructions stored in the memory 8102 and send the instructions to the processor 8101.

The communication device 8100 in the description of the above embodiments may be a network device or a first device, but the scope of the communication device 8100 described in the present disclosure is not limited thereto, and the structure of the communication device 8100 may not be limited by FIG. 7a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 7b is a block diagram of a chip 8200 according to the embodiments of the present disclosure. For the case where the communication device 8100 may be a chip or a chip system, reference may be made to the block diagram of the chip 8200 shown in FIG. 7b, but it is not limited thereto.

The chip 8200 includes one or more processors 8201, and the chip 8200 is configured to execute any one of the above methods.

In some embodiments, the chip 8200 further includes one or more interface circuits 8202. In some embodiments, the interface circuit 8202 is connected to a memory 8203, the interface circuit 8202 may be used to receive signals from the memory 8203 or other devices, and the interface circuit 8202 may be used to send signals to the memory 8203 or other devices. For example, the interface circuit 8202 may read instructions stored in the memory 8203 and send the instructions to the processor 8201.

In some embodiments, the interface circuit 8202 performs at least one of communication steps such as sending and/or receiving in the above methods (for example, S2101 or S3101, but not limited to these), and the processor 8201 performs at least one of other steps (for example, S2101 or S2102, but not limited to these).

In some embodiments, terms such as interface circuit, interface, transceiver pin, transceiver, etc. may be used interchangeably.

In some embodiments, the chip 8200 further includes one or more memories 8203 for storing instructions. In some embodiments, all or part of the memories 8203 may be located outside the chip 8200.

The present disclosure also provides a storage medium for storing instructions. When the instructions are running on the communication device 8100, the communication device 8100 is caused to implement any one of the above methods. In some embodiments, the above storage medium is an electronic storage medium. In some embodiments, the above storage medium is a computer-readable storage medium, but is not limited thereto, and it may also be a storage medium readable by other devices. In some embodiments, the above storage medium may be a non-transitory storage medium, but is not limited thereto, and it may also be a transitory storage medium.

The present disclosure also provides a program product. When the program product is executed by the communication device 8100, the communication device 8100 is caused to implement any one of the above methods. In some embodiments, the program product is a computer program product.

The present disclosure also provides a computer program. When the computer program is executed on a computer, the computer is caused to implement any one of the above methods.

## Claims

1. A method for indicating information, performed by a first device, wherein the first device is an ambient-Internet of Things (ambient IoT) device, comprising:
sending first information to a second device,
wherein the first information is configured to indicate the second device to trigger the first device to transmit at least one piece of first data, and the first data is small-packet data.

2. The method of claim 1, further comprising:
receiving a first signal sent by the second device, wherein the first signal is sent by the second device according to the first information.

3. The method of claim 2, further comprising:
transmitting the at least one piece of first data using a reflected signal of the first signal.

4. The method of any one of claims 1 to 3, wherein the first information comprises at least one of:
a first quantity, indicating a number of triggers that the first device expects the second device to trigger the first device to transmit the first data;
a first interval time, indicating a time interval between two consecutive times the second device triggers the first device to transmit the first data;
first indication information, indicating whether the second device is expected to trigger the first device to transmit the first data again; or
a first data volume, indicating an amount of the first data to be transmitted.

5. The method of any one of claims 1 to 4, wherein sending the first information to the second device comprises one of:
sending the first information to the second device via a medium access control control element (MAC CE);
sending the first information to the second device via a radio resource control (RRC) message; and
sending the first information to the second device via an MAC header of an MAC protocol data unit (PDU).

6. The method of any one of claims 1 to 5, wherein the first information is carried in an MAC header of an MAC CE; or the first information is carried in an MAC payload of an MAC CE.

7. The method of any one of claims 1 to 6, wherein the first data is obtained based on second data.

8. The method of any one of claims 1 to 7, further comprising:
dividing the second data into at least two segments, wherein each segment corresponds to one piece of the first data.

9. The method of claim 8, wherein dividing the second data into the at least two segments comprises one of:
dividing the second data into the at least two segments at an MAC layer of the first device; and
dividing the second data into the at least two segments at an RRC layer of the first device.

10. The method of any one of claim 8 or 9, further comprising:
sending second information and/or third information to the second device,
wherein the second information indicates that the second data is divided into the at least two segments at an MAC layer of the first device or at an RRC layer of the first device; and the third information indicates that the at least two segments belong to the second data.

11. The method of claim 10, wherein the third information comprises a segment number, or the third information comprises a group number, or the third information comprises a segment number and a group number, wherein the segment number indicates a segment to which the first data belongs, and the group number indicates the second data to which the segment belongs.

12. The method of any one of claims 1 to 11, wherein the segment number and/or the group number is carried in an MAC header of an MAC CE.

13. The method of any one of claims 1 to 12, further comprising one of:
allocating a sequence number to each piece of the first data at an MAC layer of the first device, wherein the sequence number indicates one piece of the first data; or
allocating a sequence number to each piece of the first data at an RRC layer of the first device, wherein the sequence number indicates one piece of the first data.

14. The method of any one of claims 1 to 13, further comprising:
sending fourth information to the second device,
wherein the fourth information indicates that the sequence number is allocated to the first data at the MAC layer of the first device or at the RRC layer of the first device.

15. The method of any one of claim 13 or 14, wherein the sequence number is carried in an MAC header of an MAC CE or in an RRC message.

16. The method of claim 11 or 13, wherein at least one of the segment number, the group number, or the sequence number corresponding to the first data transmitted within a predetermined time window is used to determine whether the first data is first data expected to receive, and/or at least one of the segment number, the group number, or the sequence number of the first data is used to obtain the second data via sorting and reassembly.

17. The method of any one of claims 1 to 16, wherein the second device is one of:
a terminal;
a relay device;
an integrated access backhaul (IAB) device; and
a repeater.

18. A method for indicating information, performed by a second device, comprising:
receiving first information sent by a first device; and
triggering, according to the first information, the first device to transmit at least one piece of first data, wherein first data is small-packet data.

19. The method of claim 18, further comprising:
sending a first signal to the first device, wherein the first signal is sent by the second device according to the first information.

20. The method of claim 19, further comprising:
receiving the at least one piece of first data transmitted by the first device using a reflected signal of the first signal.

21. The method of any one of claims 18 to 20, wherein the first information comprises at least one of:
a first quantity, indicating a number of triggers that the first device expects the second device to trigger the first device to transmit the first data;
a first interval time, indicating a time interval between two consecutive times the second device triggers the first device to transmit the first data;
first indication information, indicating whether the second device is expected to trigger the first device to transmit the first data again; or
a first data volume, indicating an amount of the first data to be transmitted.

22. The method of any one of claims 18 to 21, wherein receiving the first information sent by the first device comprises one of:
receiving the first information sent by the first device via a medium access control control element (MAC CE);
receiving the first information sent by the first device via a radio resource control (RRC) message; and
receiving the first information sent by the first device via an MAC header of an MAC protocol data unit (PDU).

23. The method of any one of claims 18 to 22, wherein the first information is carried in an MAC header of an MAC CE; or the first information is carried in an MAC payload of an MAC CE.

24. The method of any one of claims 18 to 23, wherein the first data is obtained based on second data.

25. The method of claim 24, wherein the second data is divided into at least two segments, wherein each segment corresponds to one piece of the first data.

26. The method of claim 25, wherein the second data is divided into the at least two segments at an MAC layer or at an RRC layer.

27. The method of any one of claims 18 to 26, further comprising:
receiving second information and/or third information sent by the first device,
wherein the second information indicates that the second data is divided into the at least two segments at an MAC layer of the first device or at an RRC layer of the first device; and the third information indicates that the at least two segments belong to the second data, and each segment corresponds to one piece of the first data.

28. The method of claim 27, wherein the third information comprises a segment number, or the third information comprises a group number, or the third information comprises a segment number and a group number, wherein the segment number indicates a segment to which the first data belongs, and the group number indicates the second data to which the segment belongs.

29. The method of claim 28, wherein the segment number and/or the group number is carried in an MAC header of an MAC CE.

30. The method of any one of claim 28 or 29, further comprising:
determining, according to at least one of the segment number, the group number, or a sequence number corresponding to the first data received within a predetermined time window, whether the small-packet data is first data expected to receive.

31. The method of any one of claims 18 to 30, further comprising:
receiving fourth information sent by the first device,
wherein the fourth information indicates that a sequence number is allocated to the first data at an MAC layer of the first device or at an RRC layer of the first device.

32. The method of claim 31, wherein the sequence number is carried in an MAC header of an MAC CE or in an RRC message.

33. The method of claim 28 or 32, wherein at least one of the segment number, the group number, or the sequence number corresponding to the first data received within the predetermined time window is used to determine whether the first data is first data expected to receive, and/or at least one of the segment number, the group number, or the sequence number of the first data is used to obtain the second data via sorting and reassembly.

34. The method of any one of claims 18 to 33, wherein the second device is one of:
a terminal;
a relay device;
an integrated access backhaul (IAB) device; and
a repeater.

35. A method for indicating information, comprising:
sending, by a first device, first information to a second device,
wherein the first information is configured to indicate the second device to trigger the first device to transmit at least one piece of first data, and the first data is small-packet data.

36. A first device, comprising:
a transceiver module, configured to send first information to a second device,
wherein the first information is configured to indicate the second device to trigger the first device to transmit at least one piece of first data, and the first data is small-packet data.

37. A second device, comprising:
a transceiver module, configured to receive first information sent by a first device; and
a processing module, configured to: trigger, according to the first information, the first device to transmit at least one piece of first data, wherein first data is small-packet data.

38. A communication system, comprising a first device and a second device, wherein the first device is configured to implement the method for indicating information of any one of claims 1 to 17, and the second device is configured to implement the method for indicating information of any one of claims 18 to 34.

39. A first device, comprising:
one or more processors,
wherein the first device is configured to implement the method for indicating information of any one of claims 1 to 17.

40. A second device, comprising:
one or more processors,
wherein the second device is configured to implement the method for indicating information of any one of claims 18 to 34.

41. A storage medium for storing instructions that, when executed by a communication device, cause the communication device to implement the communication method of any one of claims 1 to 17, or the communication method of any one of claims 18 to 34.
